(19) Europäisches Patentamt
European Patent Office
Office européen des brevets

(11) **EP 4 588 741 A1**

(12) **EUROPEAN PATENT APPLICATION**
published in accordance with Art. 153(4) EPC

(43) Date of publication:
**23.07.2025 Bulletin 2025/30**

(21) Application number: **22958309.1**

(22) Date of filing: **13.09.2022**

(51) International Patent Classification (IPC):
**B60W 20/13** (2016.01) **B60L 58/12** (2019.01)

(52) Cooperative Patent Classification (CPC):
**B60L 58/12; B60W 20/13**

(86) International application number:
**PCT/JP2022/034290**

(87) International publication number:
**WO 2024/057422 (21.03.2024 Gazette 2024/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NISSAN MOTOR CO., LTD.
Kanagawa 221-0023 (JP)**

(72) Inventor: **ORITA, Shuichi
Atsugi-shi, Kanagawa 243-0123 (JP)**

(74) Representative: **Hoefer & Partner Patentanwälte
mbB
Pilgersheimer Straße 20
81543 München (DE)**

(54) **HYBRID VEHICLE CONTROL METHOD AND HYBRID VEHICLE CONTROL SYSTEM**

(57) A control method for a hybrid vehicle, comprising: exchanging electric power between a drive motor 1 and a battery 2; charging the battery 2 by a generator 4 driven by an engine 3 for power generation; and treating exhaust gas discharged from the engine 3 by a catalyst, wherein when a state of charge of the battery 2 exceeds a predetermined threshold value due to regenerative electric power received from the drive motor 1, a fuel supply to the engine 3 is stopped to stop power generation by the generator 4 and the regenerative electric power is consumed by supplying electric power from the battery 2 to the generator 4 to perform an electric power running operation (motoring) on the engine 3, and in a state in which a temperature of the catalyst is lower than an upper limit temperature at which deterioration of the catalyst is suppressible, the closer the temperature of the catalyst approaches the upper limit temperature, or the faster a rate of increase in the temperature of the catalyst becomes, the greater a discharge amount of the battery 2 is increased.

FIG. 3

**Description**

TECHNICAL FIELD

The present invention relates to a control method for a hybrid vehicle and a control system for a hybrid vehicle.

BACKGROUND ART

JP2021-110268A discloses a content of including a generator driven by an engine for power generation and configured to generate electric power, a catalyst for treating exhaust gas discharged from the engine, a battery configured to store the electric power generated by the generator and supply the electric power to a motor, and a battery control unit configured to prohibit power generation by the generator when a state of charge of the battery is equal to or higher than a first state of charge threshold value for suppressing overcharge. Further, in JP2021-110268A, in a case where a discharging condition that the state of charge of the battery exceeds a second state of charge threshold value that is lower than the first state of charge threshold value is satisfied, the battery control unit increases an electric power supply from the battery to the motor as compared with a case where the discharging condition is not satisfied.

SUMMARY OF INVENTION

Incidentally, the state of charge of the battery is also increased by receiving regenerative electric power from the motor. A case where the state of charge reaches the first state of charge threshold value when the battery receives the regenerative electric power from the motor for a long time may occur. In this case, similarly to the above, in order to suppress overcharge, it is necessary to perform control of stopping a fuel supply to the engine and supplying the electric power of the battery to the generator to drive (perform electric power running operation on) the engine (internal combustion engine), that is, performing motoring to discharge electric power and consume the regenerative electric power. On the other hand, the catalyst deteriorates when the catalyst is exposed to a lean atmosphere in a state of exceeding a predetermined upper limit temperature. Accordingly, when the fuel supply to the engine is stopped in a state in which the temperature of the catalyst exceeds the upper limit temperature, the catalyst may deteriorate.

Therefore, an object of the present invention is to provide a control method for a hybrid vehicle and a control system for a hybrid vehicle that suppress deterioration of a catalyst.

According to an aspect of the present invention, there is provided a control method for a hybrid vehicle, including: exchanging electric power between a drive motor and a battery; charging the battery by a generator driven by an engine for power generation; and treating exhaust gas discharged from the engine by a catalyst. In the control method, when a state of charge of the battery exceeds a predetermined threshold value due to regenerative electric power received from the drive motor, a fuel supply to the engine is stopped to stop power generation by the generator and the regenerative electric power is consumed by supplying electric power from the battery to the generator to perform an electric power running operation on the engine. In a state in which a temperature of the catalyst is lower than an upper limit temperature at which deterioration of the catalyst is suppressible, the closer the temperature of the catalyst approaches the upper limit temperature, or the faster a rate of increase in the temperature of the catalyst becomes, the greater a discharge amount of the battery is increased.

BRIEF DESCRIPTION OF DRAWINGS

[FIG. 1] FIG. 1 is a schematic diagram of a control system for a hybrid vehicle according to the present embodiment.
[FIG. 2] FIG. 2 is a diagram illustrating a charging and discharging request curve representing a charging request for a battery and a discharging request for the battery in a coordinate space having axes of a charging and discharging current for the battery and a state of charge of the battery.
[FIG. 3] FIG. 3 is a map illustrating a relation between a temperature of a catalyst, a rate of increase in the temperature of the catalyst, and a central state of charge set by a vehicle controller.
[FIG. 4] FIG. 4 is a time chart of the temperature of the catalyst, a discharging request output by the vehicle controller, and the central state of charge set by the vehicle controller.
[FIG. 5] FIG. 5 is a block diagram of the vehicle controller.
[FIG. 6] FIG. 6 is a map of a request adjustment unit constituting the vehicle controller and is a map for calculating a central state of charge (Z) of the battery based on a first central state of charge (Y) calculated by a charging request unit and a second central state of charge (X) calculated by a discharging request unit.
[FIG. 7] FIG. 7 is a control flowchart of the vehicle controller.

## DESCRIPTION OF EMBODIMENTS

[Basic Configuration of Present Embodiment]

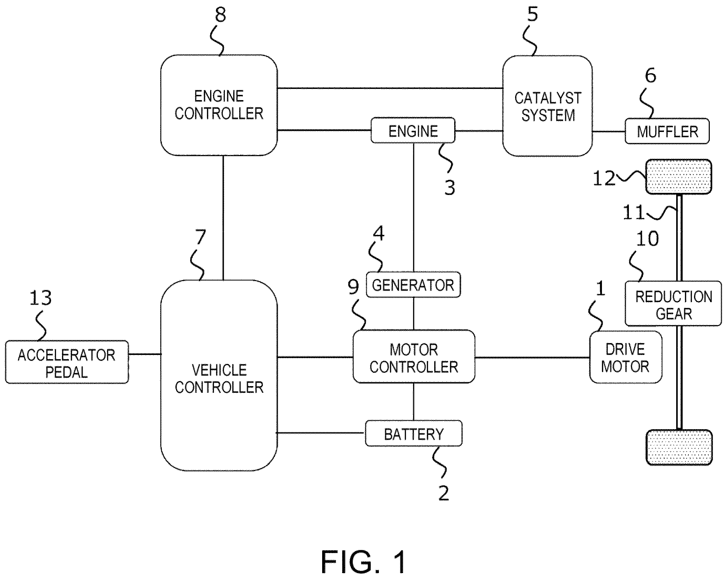

FIG. 1 is a schematic diagram of a control system for a hybrid vehicle according to the present embodiment. As illustrated in FIG. 1, the control system for a hybrid vehicle according to the present embodiment includes a drive motor 1, a battery 2, an engine 3, a generator 4, a catalyst system 5, and a control unit (vehicle controller 7, engine controller 8, and motor controller 9).

The drive motor 1 is mechanically coupled to drive wheels 12 via a reduction gear 10 and a drive shaft 11, and drives the drive wheels 12 by receiving electric power from the battery 2 (and generator 4). In addition, the drive motor 1 generates regenerative electric power in a case where rotation of the drive wheels 12 is decelerated.

The battery 2 supplies the electric power to the drive motor 1, and is charged with the regenerative electric power generated by the drive motor 1 and the electric power generated by the generator 4.

The engine 3 (internal combustion engine) is, for example, a gasoline engine. The engine 3 is coupled to the generator 4 in a power transmittable manner, and causes the generator 4 to generate electric power by burning fuel (gasoline) and rotating.

The generator 4 supplies the generated electric power to the battery 2 and the drive motor 1. The generator 4 may perform an electric power running operation (motoring) on the engine 3 to which a fuel supply is stopped by receiving electric power from the battery 2. The electric power running operation is used for the purpose of consuming extra regenerative electric power, as well as for cranking of the engine 3 at the start of the engine 3 and generation of negative pressure for brake pedal assist.

The catalyst system 5 treats exhaust gas discharged from the engine 3 into harmless gas, and discharges the harmless gas to the outside through a muffler 6.

The control unit (vehicle controller 7, engine controller 8, and motor controller 9) is implemented by one or a plurality of microcomputers including a central processing unit (CPU), a read-only memory (ROM), a random access memory (RAM), and an input/output interface (I/O interface). In the control unit (vehicle controller 7, engine controller 8, and motor controller 9), various kinds of control are executed by the CPU executing programs stored in the ROM or the RAM.

The vehicle controller 7 outputs a torque command value to the motor controller 9 based on an accelerator position (accelerator opening degree) indicated by an accelerator pedal 13.

The vehicle controller 7 outputs a discharging request to the motor controller 9 in a case where the state of charge of the battery 2 is higher than a predetermined reference state of charge (central state of charge), and outputs a charging request to the motor controller 9 in a case where the state of charge is lower than the predetermined reference state of charge.

Further, the vehicle controller 7 shifts the central state of charge to a low state of charge side with respect to the reference state of charge (for example, 55 [%]) in a case where catalyst deterioration suppression control to be described later is executed, and shifts the central state of charge to a high state of charge side with respect to the reference state of charge in a case where pre-charging request control to be described later is executed. In a case where it is determined that the catalyst deterioration suppression control and the pre-charging request control to be described later are required simultaneously, the vehicle controller 7 sets the central state of charge to a state of charge that is arbitrated between the two kinds of control as to be described later.

When the state of charge of the battery 2 exceeds a predetermined threshold value (for example, 80 [%]), the vehicle controller 7 outputs an engine stop command to the engine controller 8 and outputs an electric power running operation command to the motor controller 9.

Upon receiving an engine start command from the vehicle controller 7, the engine controller 8 starts the fuel supply to the engine 3 to start up the engine 3. The engine controller 8 controls an output of the engine 3 based on an output required for the generator 4, and the engine controller 8 controls the output of the engine 3 such that an operating point (rotation speed, torque) of the engine 3 is an optimal operating point (point at which output efficiency is maximum).

Upon receiving the engine stop command from the vehicle controller 7, the engine controller 8 stops the fuel supply to the engine 3 to stop driving of the engine 3 (power generation by generator 4).

The engine controller 8 acquires information on a temperature of a catalyst (for example, titanium (Ti)) included in the catalyst system 5 and outputs the information to the vehicle controller 7.

The motor controller 9 controls the drive motor 1 based on the torque command value and the discharging request (or charging request), and controls the generator 4 based on the discharging request (or charging request).

Upon receiving the discharging request from the vehicle controller 7, the motor controller 9 increases a discharge amount of the battery 2 and reduces the output of the generator 4 accordingly.

In addition, upon receiving a charging request from the vehicle controller 7, the motor controller 9 reduces the discharge amount of the battery 2 and increases the output of the generator 4 accordingly.

Further, upon receiving the electric power running operation command from the vehicle controller 7, the motor controller 9 drives the generator 4 using the electric power from the battery 2 (by discharging) and performs the electric power running operation (motoring) on the engine 3 to which the fuel supply is stopped.

The motor controller 9 includes a first inverter that connects the battery 2 and the drive motor 1, and a second inverter that connects the generator 4 and the battery 2 (and drive motor 1). The inverters may be understood as configurations separate from the motor controller 9.

The first inverter converts DC power of the battery 2 into AC power based on the motor torque command value and the discharging request (or charging request), and outputs the AC power to the drive motor 1. The first inverter outputs AC power larger than the AC power obtained based on the torque command value to the drive motor 1 in a case where the motor controller 9 receives the discharging request, and outputs AC power smaller than the AC power obtained based on the torque command value to the drive motor 1 in a case where the motor controller 9 receives the charging request. In addition, in a case where the drive motor 1 generates regenerative electric power, the first inverter converts the regenerative electric power into DC power to charge the battery 2.

The second inverter converts AC power generated by the generator 4 into DC power to charge the battery 2. In addition, when the motor controller 9 receives the electric power running operation command, the second inverter converts the DC power of the battery 2 into AC power and outputs the AC power to the generator 4.

[Charging and Discharging Request Curve]

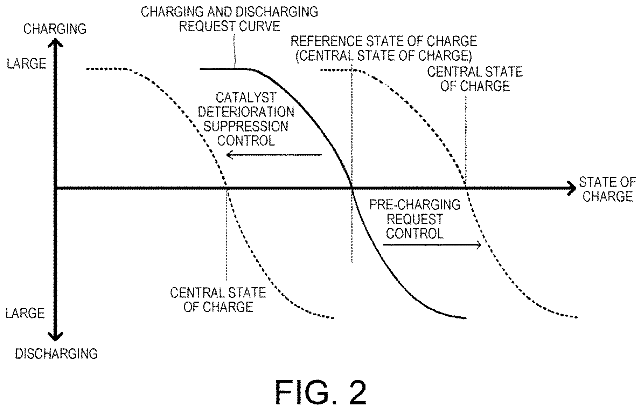

FIG. 2 is a diagram illustrating a charging and discharging request curve representing a charging request for the battery 2 and a discharging request for the battery 2 in a coordinate space having axes of a charging and discharging current for the battery 2 and a state of charge of the battery 2.

As illustrated in FIG. 2, the charging and discharging request curve has an inflection point at a predetermined central state of charge (reference state of charge), for example, and draws a curve monotonically increased in an upward convex shape as the state of charge becomes lower than the central state of charge, and draws a curve monotonically reduced in a downward convex shape as the state of charge becomes higher than the central state of charge. In the charging and discharging request curve, the charging request becomes zero when the state of charge is equal to or higher than the central state of charge, and the discharging request becomes zero when the state of charge is equal to or lower than the central state of charge. That is, when the state of charge is the central state of charge, the charging request and the discharging request become zero.

A charging request amount (current value) of the charging request is monotonically increased according to the charging and discharging request curve as the state of charge becomes lower than the central state of charge.

A discharging request amount (current value) of the discharging request is monotonically increased according to the charging and discharging request curve as the state of charge becomes higher than the central state of charge.

The vehicle controller 7 sets the charging and discharging request curve such that an initial value of the central state of charge becomes the reference state of charge (for example, 55 [%]).

On the other hand, the vehicle controller 7 shifts the charging and discharging request curve to the low state of charge side by shifting the central state of charge to, for example, the low state of charge side with respect to the reference state of charge when the catalyst deterioration suppression control to be described later is executed. In addition, the vehicle controller 7 shifts the charging and discharging request curve to the high state of charge side by shifting the central state of charge to, for example, the high state of charge side with respect to the reference state of charge when the pre-charging request control to be described later is executed. Further, in a case where it is determined that the catalyst deterioration suppression control and the pre-charging request control to be described later are required simultaneously, the vehicle controller 7 sets the central state of charge to a central state of charge that is arbitrated between the two kinds of control as to be described later.

[Catalyst Deterioration Suppression Control and Pre-charging Request Control]

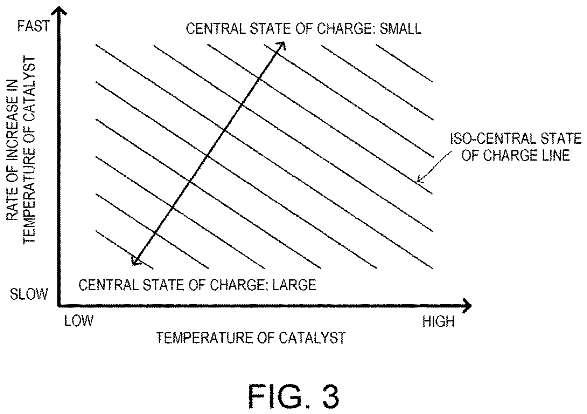

FIG. 3 is a map illustrating a relation between a temperature of a catalyst, a rate of increase in the temperature of the catalyst, and a central state of charge set by the vehicle controller 7.

The state of charge of the battery 2 is increased by the regenerative electric power received from the drive motor 1 and generated electric power received from the generator 4. In particular, when receiving the regenerative electric power for a long time, the battery enters an overcharge state with a predetermined threshold value (for example, 80 [%]) exceeded, and the battery 2 may deteriorate. Therefore, in the present embodiment as well, when the threshold value is exceeded, control is executed in which the fuel supply to the engine 3 is stopped to stop power generation by the generator 4, and the regenerative electric power is consumed (state of charge of battery 2 is reduced) by supplying the electric power from the battery 2 to the generator 4 to perform the electric power running operation (motoring) on the engine 3 to which the fuel supply is stopped. In this case, the catalyst is exposed to a lean atmosphere, and when the temperature of the catalyst in that case exceeds a predetermined upper limit temperature (for example, 700°C), deterioration of the catalyst may occur.

Therefore, in the present embodiment, the catalyst deterioration suppression control is executed in which the deterioration of the catalyst is suppressed by reducing a frequency at which the state of charge of the battery 2 exceeds a threshold value (for example, 80 [%]) for executing the motoring of the engine 3 in a state in which the temperature of the catalyst exceeds the upper limit temperature (for example, 700 [°C]). In the catalyst deterioration suppression control, the deterioration of the catalyst is suppressed by shifting the central state of charge of the battery 2 to the low state of charge side, and reducing the frequency at which the state of charge of the battery 2 exceeds the threshold value.

In the catalyst deterioration suppression control, in a case where the temperature of the catalyst exceeds a first reference temperature (for example, 650°C) lower than the upper limit temperature (700°C), the central state of charge is set to a state of charge lower than the reference state of charge, and as the temperature of the catalyst further increases, the central state of charge is shifted to the low state of charge side.

In addition, in the catalyst deterioration suppression control, in a case where a rate of increase in the temperature of the catalyst exceeds a predetermined speed even when the temperature of the catalyst is lower than the upper limit temperature, the central state of charge is set to a state of charge lower than the reference state of charge, and as the rate of increase is further increased, the central state of charge is shifted to the low state of charge side.

Accordingly, in a coordinate space in which the horizontal axis represents the temperature of the catalyst and the vertical axis represents the rate of increase in the temperature of the catalyst, the central state of charge set in the catalyst deterioration suppression control can be indicated by iso-central state of charge lines illustrated in FIG. 3. In FIG. 3, the same central state of charge is provided on the same iso-central state of charge line. In addition, the central state of charge is reduced as the iso-central state of charge line moves away from an origin.

The iso-central state of charge line illustrated in FIG. 3 can be applied in a case where the temperature of the catalyst is lower than the first reference temperature. However, the catalyst deterioration suppression control is not substantially executed in a case where the central state of charge required for the catalyst deterioration suppression control is higher than the reference state of charge, except for a case where the pre-charging request control to be described later is executed in combination.

In a case where the same central state of charge is applied, it is preferable to provide a hysteresis width (for example, 20 [°C]) in relation to the temperature by setting a trigger level at the time of increasing the temperature of the catalyst (temperature when switching to central state of charge) to be higher than a trigger level at the time of lowering the temperature (temperature when switching to central state of charge). Accordingly, in a state in which the temperature of the catalyst is repeatedly increased and lowered, the central state of charge can be set such that the central state of charge is not switched at a high frequency, thereby reducing a burden of control.

In the catalyst deterioration suppression control, the output of the generator 4 (output of engine 3) can be limited such that the temperature of the catalyst does not exceed the upper limit temperature.

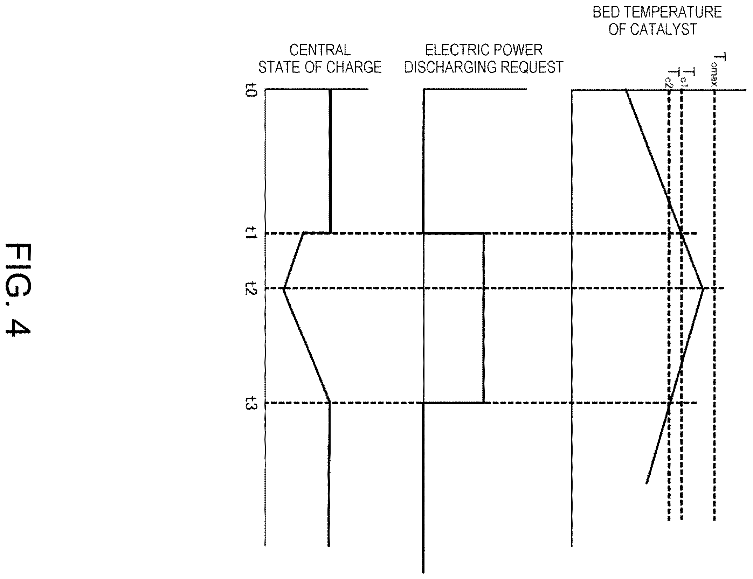

FIG. 4 is a time chart of the temperature of the catalyst, a discharging request output by the vehicle controller 7, and the central state of charge set by the vehicle controller 7. Before a time t0, the engine 3 is started up to cause the generator 4 to generate electric power and exhaust gas is discharged to the catalyst system 5, thereby increasing the temperature of the catalyst (BED temperature). In addition, the central state of charge is set to a reference charge amount.

At a time t1, when the temperature of the catalyst reaches a first reference temperature ($T_{c1}$) (for example, 650°C), the vehicle controller 7 reduces the central state of charge according to the map of FIG. 3, and outputs a discharging request to the motor controller 9 accordingly.

The motor controller 9 increases the electric power (discharge amount) from the battery 2 to the drive motor 1 and reduces the output of the generator 4.

The vehicle controller 7 shifts the central state of charge to the low state of charge side as the temperature of the catalyst is increased. Accordingly, the electric power supplied from the battery 2 to the drive motor 1 is increased as the central state of charge is reduced, and the output of the generator 4 is reduced accordingly.

At a time t2, when the temperature of the catalyst reaches a peak (for example, 670°C), the central state of charge is also set to a lowest state. Accordingly, the frequency at which the state of charge of the battery 2 exceeds the threshold value (for example, 80 [%]) can be reduced. After the time t2, when the temperature of the catalyst turns to be reduced, the vehicle controller 7 gradually starts to return the central state of charge to an original value.

At a time t3, when the temperature of the catalyst reaches, for example, a second reference temperature ($T_{c2}$) (for example, 630°C) lower than the first reference temperature and the central state of charge reaches the original reference charge amount, the vehicle controller 7 sets the central state of charge to the reference charge amount and stops the discharging request. By performing control in this manner, the temperature of the catalyst can be prevented from exceeding an upper limit temperature ($T_{max}$) (for example, 700 [°C]).

In the catalyst deterioration suppression control, it is also preferable to perform control of increasing the discharge amount of the battery 2 without changing the output of the generator 4. In this case, since the frequency at which the state of charge of the battery 2 exceeds the threshold value (for example, 80 [%]) is reduced, a frequency of stopping the fuel supply to the engine 3 to execute the motoring of the engine 3 in a state in which the temperature of the catalyst exceeds the upper limit temperature can be reduced, and the deterioration of the catalyst can be suppressed.

[Vehicle Controller 7]

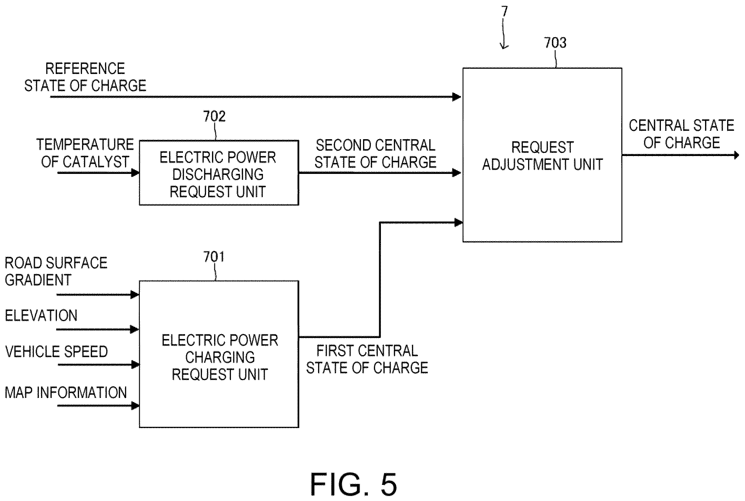

FIG. 5 is a block diagram of the vehicle controller 7. Here shows a block diagram in a case where the vehicle controller 7 performs the catalyst deterioration suppression control and the pre-charging request control. The vehicle controller 7 includes a charging request unit 701, a discharging request unit 702, and a request adjustment unit 703.

The charging request unit 701 is a component that executes the pre-charging request control. Map information is input to the charging request unit 701. The map information indicates, among travel routes to a destination of the vehicle, for example, a terrain (elevation and slope of road surface) and traffic conditions (whether there is highway or the like) of a travel route from a position on which the vehicle is currently traveling up to a predetermined distance (for example, 5 [km] or 10 [km]) ahead, and indicates a future traveling condition of the vehicle.

In the charging request unit 701, referring to the map information, for example, in a case where the vehicle is currently traveling on flat ground but an uphill slope with a predetermined gradient starts from 2 km ahead and continues for a predetermined distance or longer, it is determined that high-load driving that consumes more electric power of the battery 2 than in normal driving is to be performed. Here, the normal driving refers to, for example, a state in which the vehicle travels at a normal speed (for example, speed per hour of 60 [km/h]) on a normal road. In addition, the high-load driving refers to a state in which an electric power supply from the generator 4 to the drive motor 1 is substantially constant and an electric power supply from the battery 2 to the drive motor 1 is significantly increased to allow the vehicle to travel.

The charging request unit 701 calculates a workload required until a detected uphill slope is climbed up, calculates a first central state of charge (for example, minimum state of charge at which pre-charging request control is allowed in principle) as the charge amount of the battery 2 that can cover the workload based on the workload, and outputs the calculated first central state of charge to the request adjustment unit 703. As a result, there is no need to increase the output of the generator 4 during the high-load driving, and thus an NVH (noise, vibration, harshness) performance of the vehicle can be improved.

In addition, for example, also in a case where the vehicle is currently traveling on a normal road but is determined to enter a highway from 2 km ahead and perform high-speed driving (high-load driving), the charging request unit 701 calculates a workload for the high-speed driving, calculates the first central state of charge as the charge amount of the battery 2 that can cover that workload based on the workload, and outputs the calculated first central state of charge to the request adjustment unit 703.

In addition, the road surface gradient, the elevation, and the vehicle speed may be input to the charging request unit 701, and the first central state of charge may be corrected based on the information on the road surface gradient, the elevation, and the vehicle speed. The charging request unit 701 may correct the first central state of charge to be higher as the gradient becomes steeper, the vehicle speed becomes faster, and the elevation becomes higher.

The discharging request unit 702 is a component that executes the catalyst deterioration suppression control. When the temperature of the catalyst is input to the discharging request unit 702, the discharging request unit 702 calculates the rate of increase in the temperature of the catalyst. The discharging request unit 702 calculates a second central state of charge (for example, maximum state of charge at which catalyst deterioration suppression control is allowed in principle) based on the map illustrated in FIG. 3, and outputs the calculated second central state of charge to the request adjustment unit 703.

In addition, the map information is input to the discharging request unit 702, and the discharging request unit 702 can set the second central state of charge to a further lower value in, for example, a case where it is predicted that the temperature of the catalyst will reach the first reference temperature 2 km ahead of the vehicle, and that a downhill slope with a predetermined gradient will start 2 km ahead and the downhill slope is then continue for a predetermined distance or longer.

The request adjustment unit 703 compares the reference state of charge, the first central state of charge output from the charging request unit 701, and the second central state of charge output from the discharging request unit 702 as to be described later to calculate a final central state of charge.

[Map of Request Adjustment Unit 703]

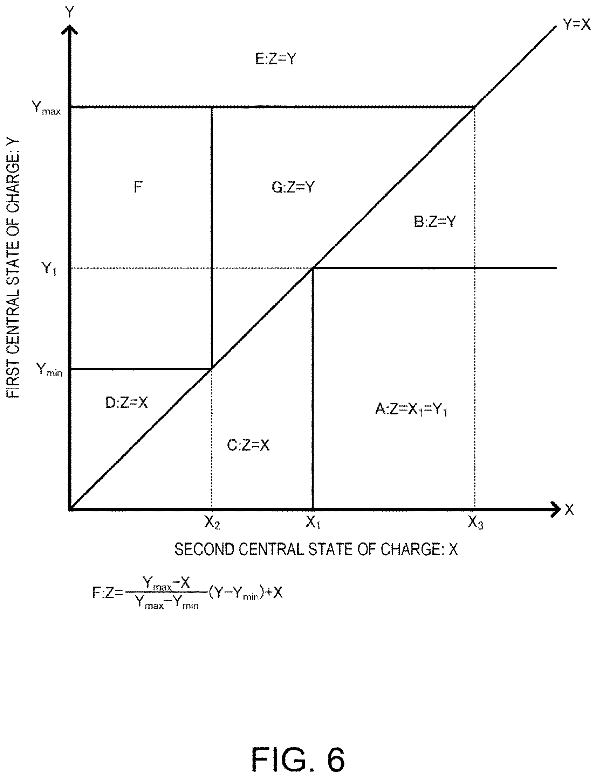

FIG. 6 is a map of the request adjustment unit 703 constituting the vehicle controller 7, and is a map in which the vehicle controller 7 calculates the central state of charge (Z) that is used as a criterion for the discharging request and the charging request based on the first central state of charge (Y) calculated by the charging request unit 701 and the second central state of charge (X) calculated by the discharging request unit 702.

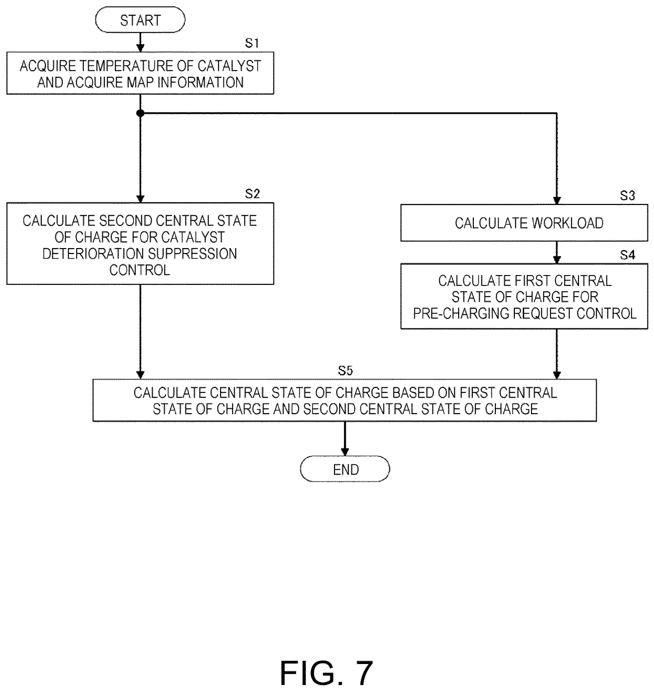

The vertical axis of FIG. 6 represents the first central state of charge (Y) and corresponds to a lower limit value of the state of charge of the battery 2 requested by the charging request unit 701. In addition, the horizontal axis of FIG. 7 represents the second central state of charge (X) and corresponds to an upper limit value of the state of charge of the battery 2 requested by the discharging request unit 702. Further, the reference state of charge is set to, for example, $X = X_1$, $Y = Y_1$ ($X_1 = Y_1 = 55$ [%]).

In a case where the first central state of charge (Y) and the second central state of charge (X) are the same (when overlapping with a line of $Y = X$ illustrated in FIG. 6), the request adjustment unit 703 sets the central state of charge (Z) to the first central state of charge (Y) or the second central state of charge (X).

More specifically, in a case where the first central state of charge (Y) and the second central state of charge (X) are the same value and higher than the reference state of charge, the request adjustment unit 703 does not follow the request from the discharging request unit 702, and sets the central state of charge (Z) following the request from the charging request unit 701. In addition, in a case where the first central state of charge (Y) and the second central state of charge (X) are the same value and lower than the reference state of charge, the request adjustment unit 703 does not follow the request of the charging request unit 701, and sets the central state of charge (Z) following the request from the discharging request unit 702. Further, in a case where the first central state of charge (Y) and the second central state of charge (X) are the same as the reference state of charge, the request adjustment unit 703 sets the central state of charge (Z) to the reference state of charge without following the request from the charging request unit 701 and the request from the discharging request unit 702.

In a case where the first central state of charge (Y) is lower than the second central state of charge (X), and the first central state of charge (Y) is lower than the reference state of charge and the second central state of charge (X) is higher than the reference state of charge (region A in FIG. 6), the request adjustment unit 703 sets the central state of charge (Z) to the reference state of charge, that is, sets $Z = X_1 = Y_1$.

In this case, the reference state of charge is higher than the first central state of charge (Y) requested by the charging request unit 701 and lower than the second central state of charge (X) requested by the discharging request unit 702, and the reference state of charge satisfies the state of charges requested by both. Accordingly, the request adjustment unit 703 sets the central state of charge to the reference state of charge.

In a case where the first central state of charge (Y) is lower than the second central state of charge (X), and the first central state of charge (Y) and the second central state of charge (X) are higher than the reference state of charge (region B in FIG. 6), the request adjustment unit 703 sets the central state of charge (Z) to the first central state of charge (Y), that is, sets $Z = Y$. In this case, since the catalyst deterioration suppression control is not substantially performed, the request adjustment unit 703 sets the central state of charge (Z) to the first central state of charge (Y).

In a case where the first central state of charge (Y) is lower than the second central state of charge (X), and the first central state of charge (Y) and the second central state of charge (X) are lower than the reference state of charge (region C in FIG. 6), the request adjustment unit 703 sets the central state of charge (Z) to the second central state of charge (X), that is, sets $Z = X$. In this case, since the pre-charging request control is not substantially performed, the request adjustment unit 703 sets the central state of charge (Z) to the second central state of charge (X).

In a case where the first central state of charge (Y) is higher than the second central state of charge (X), and the first central state of charge (Y) is lower than a predetermined lower limit value ($Y_{min}$, for example, 46 [%]) (region D in FIG. 6), the request adjustment unit 703 sets the central state of charge (Z) to the second central state of charge (X), that is, sets $Z = X$. In a case where the first central state of charge (Y) requested by the charging request unit 701 is higher than the second central state of charge (X) requested by the discharging request unit 702, determination of which of the first central state of charges (Y) and the second central state of charge (X) is preferentially selected is slightly complicated. However, in a case where the first central state of charge (Y) is lower than the predetermined lower limit value ($Y_{min}$), it can be determined that the pre-charging request control is not substantially performed. In this case, the second central state of charge (X) is also lower than the predetermined state of charge ($X < X_2 = Y_{min}$), and the discharging request is a strong discharging request in terms of the catalyst deterioration suppression control. Accordingly, in response to the strong discharging request from the discharging request unit 702, the request adjustment unit 703 sets the central state of charge (Z) to the first central state of charge (Y).

In a case where the first central state of charge (Y) is higher than the second central state of charge (X), and the first central state of charge (Y) is higher than a predetermined upper limit value ($Y_{max}$, for example, 69 [%]) that is higher than the lower limit value ($Y_{min}$) (region E in FIG. 6), the request adjustment unit 703 sets the central state of charge (Z) to the first central state of charge (Y), that is, sets $Z = Y$.

In this case, the request adjustment unit 703 determines that a strong charging request has been made in terms of the pre-charging request control and the pre-charging request control should be executed with priority over the catalyst deterioration suppression control, and sets the central state of charge (Z) to the first central state of charge (Y).

In a case where the first central state of charge (Y) is higher than the second central state of charge (X), the first central state of charge (Y) is a value between the lower limit value ($Y_{min}$) and the upper limit value ($Y_{max}$), and the second central state of charge (X) is lower than $X_2 = Y_{min}$ (region F in FIG. 6), the request adjustment unit 703 sets the central state of charge (Z) to a value close to the first central state of charge (Y) as the first central state of charge (Y) approaches the upper limit value ($Y_{max}$), and sets the central state of charge (Z) to a value close to the second central state of charge (X) as the first central state of charge (Y) approaches the lower limit value ($Y_{min}$). Here, $X_2$ is a value of X obtained by substituting $Y_{min}$ into Y in a relational expression Y = X (FIG. 6) expressed as a line in a coordinate space having the first central state of charge (Y) as the Y coordinate and the second central state of charge (X) as the X coordinate, and is the same value as $Y_{min}$.

In this case, the central state of charge (Z) can be expressed by the following equation (1) using the first central state of charge (Y), the second central state of charge (X), the lower limit value ($Y_{min}$), and the upper limit value ($Y_{max}$).
[Math. 1]

$$Z = \frac{Y_{max} - X}{Y_{max} - Y_{min}} (Y - Y_{min}) + X \qquad \cdots \quad (1)$$

In the above case, the request adjustment unit 703 does not perform control to give priority to either of the pre-charging request control and the catalyst deterioration suppression control, and achieves both the pre-charging request control and the catalyst deterioration suppression control by setting the central state of charge (Z) that is arbitrated between the first central state of charge (Y) and the second central state of charge (X) and is not disadvantageous for either of the pre-charging request control and the catalyst deterioration suppression control.

In a case where the first central state of charge (Y) is higher than the second central state of charge (X), the first central state of charge (Y) is a value between the lower limit value ($Y_{min}$) and the upper limit value ($Y_{max}$), and the second central state of charge (X) is equal to or higher than $X_2 = Y_{min}$ and lower than $X_3 = Y_{max}$ (region G in FIG. 6), the request adjustment unit 703 sets the central state of charge (Z) to the first central state of charge (Y), that is, sets Z = Y. Here, $X_3$ is a value of X obtained by substituting $Y_{max}$ into Y in the relational expression Y = X (FIG. 6) expressed as the line in the coordinate space having the first central state of charge (Y) as the Y coordinate and the second central state of charge (X) as the X coordinate, and is the same value as $Y_{max}$.

In this case, the request adjustment unit 703 determines that a strong charging request has been made in terms of the pre-charging request control and the pre-charging request control should be executed with priority over the catalyst deterioration suppression control, and sets the central state of charge (Z) to the first central state of charge (Y).

[Control Flow of Vehicle Controller 7]

FIG. 7 is a control flowchart of the vehicle controller 7. In step S1, the vehicle controller 7 (discharging request unit 702) acquires information on the temperature (BED temperature) of the catalyst. In addition, the vehicle controller 7 (charging request unit 701) acquires map information related to a travel route to a destination of the vehicle immediately before the vehicle passes through in information on the travel route of the vehicle.

In step S2, the vehicle controller 7 (discharging request unit 702) calculates the rate of increase in the temperature of the catalyst based on a temperature of the catalyst previously acquired and a temperature of the catalyst acquired this time, and calculates the second central state of charge based on information on the temperature acquired this time, the calculated rate of increase in the temperature of the catalyst, and the map illustrated in FIG. 3.

In step S3, the vehicle controller 7 (charging request unit 701) calculates the workload (energy consumption) of the vehicle based on the map information.

In step S4, the vehicle controller 7 (charging request unit 701) calculates the first central state of charge based on the workload.

In step S5, the vehicle controller 7 (charging request unit 701) calculates the central state of charge by referring to the map illustrated in FIG. 6 for the first central state of charge and the second central state of charge.

The vehicle controller 7 outputs a discharging request to the motor controller 9 in a case where the state of charge of the battery 2 is higher than the calculated central state of charge, and outputs a charging request to the motor controller 9 in a case where the state of charge is lower than the central state of charge.

[Effects of Present Embodiment]

According to the control method for a hybrid vehicle of the present embodiment, the control method includes: exchanging electric power between the drive motor 1 and the battery 2; charging the battery 2 by the generator 4 driven by the engine 3 for power generation; and treating exhaust gas discharged from the engine 3 by the catalyst (catalyst system 5). In the control method, when the state of charge of the battery 2 exceeds the predetermined threshold value (for example, 80 [%]) due to the regenerative electric power received from the drive motor 1, the fuel supply to the engine 3 is stopped to stop power generation by the generator 4, and the regenerative electric power is consumed by supplying electric power from the battery 2 to the generator 4 to perform the electric power running operation on the engine 3, and in a state in which the temperature of the catalyst (catalyst included in catalyst system 5) is lower than the upper limit temperature (for example, 700 [°C]) at which the deterioration of the catalyst is suppressible, the closer the temperature of the catalyst (catalyst included in catalyst system 5) approaches the upper limit temperature (for example, 700 [°C]), or the faster the rate of increase in the temperature of the catalyst becomes (catalyst included in catalyst system 5), the greater the discharge amount of the battery 2 is increased.

According to the above-mentioned method, since a frequency of performing the electric power running operation (motoring) of the engine 3 in a state in which the temperature of the catalyst exceeds the upper limit temperature (for example, 700 [°C]) can be reduced, the deterioration of the catalyst can be suppressed. In addition, since the deterioration of the catalyst can be suppressed, an amount of the catalyst (noble metal) can be reduced.

In the present embodiment, in a case where the state of charge is controlled according to the charging and discharging request curve (FIG. 2) in the coordinate space having axes of the charging and discharging current and the state of charge for the battery 2, the charging and discharging request curve including the central state of charge having the reference state of charge at which the charging request for the battery 2 and the discharging request for the battery 2 are zero as an initial value and representing a trace in which the charging request becomes higher as the state of charge becomes lower than the central state of charge and the discharging request becomes higher as the state of charge becomes higher than the central state of charge, as discharge amount increasing control (catalyst deterioration suppression control) for increasing the discharge amount of the battery 2, the charging and discharging request curve is shifted to the low state of charge side by shifting the central state of charge to the low state of charge side with respect to the reference state of charge.

According to the above-mentioned method, the discharging request can be made after the central state of charge is reduced by a simple method.

In the present embodiment, in a case where the pre-charging request control of shifting the central state of charge to the high state of charge side is executed when the map information related to the travel route to the destination of the vehicle immediately before the vehicle passes through is acquired in information on the travel route and it is predicted that the vehicle performs the high-load driving that consumes more electric power of the battery 2 than that of the normal driving by referring to the map information, the pre-charging request control is prioritized in a case where it is determined based on the map information that the vehicle travels uphill for a predetermined distance or longer, and the discharge amount increasing control (catalyst deterioration suppression control) is prioritized in a case where it is determined based on the map information that the vehicle travels downhill for a predetermined distance or more.

According to the above-mentioned method, the pre-charging request control and the discharge amount increasing control (catalyst deterioration suppression control) can be selected and executed according to a situation of the road on which the vehicle travels.

In the present embodiment, in a case where the pre-charging request control of shifting the central state of charge (Z) to the high state of charge side is executed when the map information related to the travel route to the destination of the vehicle immediately before the vehicle passes through is acquired in the information on the travel route and it is predicted that the high-load driving that consumes more electric power of the battery 2 than that of the normal driving of the vehicle is performed by referring to the map information, the workload of the high-load driving is calculated based on the map information, and the central state of charge requested by the pre-charging request control is calculated as the first central state of charge (Y) based on the workload, the central state of charge requested by the discharge amount increasing control (catalyst deterioration suppression control) is calculated as the second central state of charge (X) based on the temperature of the catalyst or the rate of increase, the central state of charge (Z) is set to the second central state of charge (X) in a case where the first central state of charge (Y) is higher than the second central state of charge (X) and the first central state of charge (Y) is lower than the predetermined lower limit value ($Y_{min}$), the central state of charge (Z) is set to the first central state of charge (Y) in a case where the first central state of charge (Y) is higher than the second central state of charge (X) and the first central state of charge (Y) is higher than the predetermined upper limit value ($Y_{max}$) that is higher than the lower limit value ($Y_{min}$), and in a case where the first central state of charge (X) is higher than the second central state of charge (Y) and the first central state of charge (Y) is a value between the lower limit value ($Y_{min}$) and the upper limit value ($Y_{max}$), the central state of charge (Z) is set to a value closer to the first central state of charge (Y) as the first central state of charge (Y) approaches the upper limit value ($Y_{max}$), and the central state of charge (Z) is set to a value closer to the second central state of charge (X) as the first central state of charge (Y) approaches the lower limit value ($Y_{min}$).

According to the above-mentioned method, the priority is increased as the first central state of charge (Y) is increased in the pre-charging request control, and the priority is increased as the second central state of charge (X) is reduced in the catalyst deterioration suppression control. Accordingly, a level of the priority of the pre-charging request control and the catalyst deterioration suppression control can be determined according to the situation of the road on which the vehicle travels, and the pre-charging request control and the catalyst deterioration suppression control can be appropriately executed. In addition, when the catalyst deterioration suppression control is executed, since the state of charge of the battery 2 is reduced in advance, the number of times of the motoring of the engine 3 in a case where the temperature of the catalyst is equal to or lower than the upper limit temperature can be reduced.

In the present embodiment, the central state of charge (Z) is set to the first central state of charge (Y) or the second central state of charge (X) in a case where the first central state of charge (Y) and the second central state of charge (X) are the same, the central state of charge (Z) is set to the reference state of charge in a case where the first central state of charge (Y) is lower than the second central state of charge (X), the first central state of charge (Y) is lower than the reference state of charge ($Y_1$, for example, 55 [%]), and the second central state of charge (X) is higher than the reference state of charge ($X_1 = Y_1$), the central state of charge (Z) is set to the first central state of charge (Y) in a case where the first central state of charge (Y) is lower than the second central state of charge (X) and the first central state of charge (Y) and the second central state of charge (X) are higher than the reference state of charge, and the central state of charge (Z) is set to the second central state of charge (X) in a case where the first central state of charge (Y) is lower than the second central state of charge (X) and the first central state of charge (Y) and the second central state of charge (X) are lower than the reference state of charge.

According to the above-mentioned method, the priority is increased as the first central state of charge (Y) is increased in the pre-charging request control, and the priority is increased as the second central state of charge (X) is reduced in the catalyst deterioration suppression control. Accordingly, a level of the priority of the pre-charging request control and the catalyst deterioration suppression control can be determined according to the situation of the road on which the vehicle travels, and the pre-charging request control and the catalyst deterioration suppression control can be appropriately executed. In addition, when the catalyst deterioration suppression control is executed, since the state of charge of the battery 2 is reduced in advance, the number of times of the motoring of the engine 3 in a case where the temperature of the catalyst is equal to or lower than the upper limit temperature can be reduced.

In the present embodiment, the output of the engine 3 that drives the generator 4 is reduced by an amount corresponding to an increase in the discharge amount of the battery 2.

According to the above-mentioned method, the increase in the temperature of the catalyst can be suppressed by reducing the output of the engine 3 that drives the generator 4, and the deterioration of the catalyst can be suppressed accordingly.

According to the control system for a hybrid vehicle of the present embodiment, the control system includes: the drive motor 1; the battery 2 configured to exchange electric power with the drive motor 1; the generator 4 configured to generate electric power by being driven by the engine 3 for power generation and charge the battery 2; the catalyst (catalyst system 5) for treating exhaust gas discharged from the engine 3; and the control unit (vehicle controller 7, engine controller 8, and motor controller 9) configured to control the battery 2, the engine 3, and the generator 4. In the control system, the control unit (vehicle controller 7, engine controller 8, and motor controller 9) is configured to, when the state of charge of the battery 2 exceeds the predetermined threshold value (for example, 80 [%]) due to the regenerative electric power received from the drive motor 1, stop the fuel supply to the engine 3 to stop power generation by the generator 4, and supply electric power from the battery 2 to the generator 4 to perform the electric power running operation on the engine 3 such that the regenerative electric power is consumed, and the control unit (vehicle controller 7, engine controller 8, and motor controller 9) is configured such that, in a state in which the temperature of the catalyst (catalyst included in the catalyst system 5) is lower than the upper limit temperature (for example, 700 [°C]) at which the deterioration of the catalyst is suppressible, the closer the temperature of the catalyst (catalyst included in the catalyst system 5) approaches the upper limit temperature (for example, 700 [°C]), or the faster the rate of increase in the temperature of the catalyst (catalyst included in the catalyst system 5) becomes, the greater the discharge amount of the battery 2 is increased.

According to the above-mentioned configuration, since the frequency of performing the electric power running operation (motoring) of the engine 3 in a state in which the temperature of the catalyst exceeds the upper limit temperature (for example, 700 [°C]) can be reduced, the deterioration of the catalyst can be suppressed. In addition, since the deterioration of the catalyst can be suppressed, an amount of the catalyst (noble metal) can be reduced.

Although the embodiments of the present invention have been described above, the above embodiments merely exemplify some of application examples of the present invention and do not intend to limit the technical scope of the present invention to the specific configurations of the above embodiments. The above embodiment can be combined as appropriate.

**Claims**

1.  A control method for a hybrid vehicle, comprising: exchanging electric power between a drive motor and a battery; charging the battery by a generator driven by an engine for power generation; and treating exhaust gas discharged from the engine by a catalyst, wherein

when a state of charge of the battery exceeds a predetermined threshold value due to regenerative electric power received from the drive motor, a fuel supply to the engine is stopped to stop power generation by the generator and the regenerative electric power is consumed by supplying electric power from the battery to the generator to perform an electric power running operation on the engine, and

in a state in which a temperature of the catalyst is lower than an upper limit temperature at which deterioration of the catalyst is suppressible, the closer the temperature of the catalyst approaches the upper limit temperature, or the faster a rate of increase in the temperature of the catalyst becomes, the greater a discharge amount of the battery is increased.

2. The control method for a hybrid vehicle according to claim 1, wherein

in a case where the state of charge is controlled according to a charging and discharging request curve in a coordinate space having axes of a charging and discharging current and the state of charge for the battery, the charging and discharging request curve including a central state of charge having a reference state of charge at which a charging request for the battery and a discharging request for the battery are zero as an initial value and representing a trace in which the charging request becomes higher as the state of charge becomes lower than the central state of charge and the discharging request becomes higher as the state of charge becomes higher than the central state of charge,

as discharge amount increasing control of increasing the discharge amount of the battery, the charging and discharging request curve is shifted to a low state of charge side by shifting the central state of charge to the low state of charge side with respect to the reference state of charge.

3. The control method for a hybrid vehicle according to claim 2, wherein

in a case where pre-charging request control of shifting the central state of charge to a high state of charge side is executed when map information related to a travel route to a destination of a vehicle immediately before the vehicle passes through is acquired in information on the travel route and it is predicted that the vehicle performs high-load driving that consumes more electric power of the battery than that of normal driving by referring to the map information,

the pre-charging request control is prioritized in a case where it is determined based on the map information that the vehicle travels uphill for a predetermined distance or longer, and

the discharge amount increasing control is prioritized in a case where it is determined based on the map information that the vehicle travels downhill for a predetermined distance or longer.

4. The control method for a hybrid vehicle according to claim 2, wherein

in a case where pre-charging request control of shifting the central state of charge to a high state of charge side is executed when map information related to a travel route to a destination of a vehicle immediately before the vehicle passes through is acquired in information on the travel route and it is predicted that high-load driving that consumes more electric power of the battery than that of normal driving of the vehicle is performed by referring to the map information,

a workload of the high-load driving is calculated based on the map information, and the central state of charge requested by the pre-charging request control is calculated as a first central state of charge based on the workload,

the central state of charge requested by the discharge amount increasing control is calculated as a second central state of charge based on the temperature of the catalyst or the rate of increase,

the central state of charge is set to the second central state of charge in a case where the first central state of charge is higher than the second central state of charge and the first central state of charge is lower than a predetermined lower limit value,

the central state of charge is set to the first central state of charge in a case where the first central state of charge is higher than the second central state of charge and the first central state of charge is higher than a predetermined upper limit value that is higher than the lower limit value, and

in a case where the first central state of charge is higher than the second central state of charge and the first central state of charge is a value between the lower limit value and the upper limit value, the central state of charge is set to a value closer to the first central state of charge as the first central state of charge approaches the upper limit value and the central state of charge is set to a value closer to the second central state of charge as the first central state of charge approaches the lower limit value.

5. The control method for a hybrid vehicle according to claim 4, wherein

the central state of charge is set to the first central state of charge or the second central state of charge in a case where the first central state of charge and the second central state of charge are the same,

the central state of charge is set to the reference state of charge in a case where the first central state of charge is lower than the second central state of charge, the first central state of charge is lower than the reference state of charge, and the second central state of charge is higher than the reference state of charge,

the central state of charge is set to the first central state of charge in a case where the first central state of charge is lower than the second central state of charge and the first central state of charge and the second central state of charge are higher than the reference state of charge, and

the central state of charge is set to the second central state of charge in a case where the first central state of charge is lower than the second central state of charge and the first central state of charge and the second central state of charge are lower than the reference state of charge.

6. The control method for a hybrid vehicle according to claim 1, wherein
an output of the engine that drives the generator is reduced by an amount corresponding to an increase in the discharge amount of the battery.

7. A control system for a hybrid vehicle, comprising:

a drive motor;
a battery configured to exchange electric power with the drive motor;
a generator configured to generate electric power by being driven by an engine for power generation and charge the battery;
a catalyst for treating exhaust gas discharged from the engine; and
a control unit configured to control the battery, the engine, and the generator, wherein
the control unit is configured to, when a state of charge of the battery exceeds a predetermined threshold value due to regenerative electric power received from the drive motor, stop a fuel supply to the engine to stop power generation by the generator, and supply electric power from the battery to the generator to perform an electric power running operation on the engine such that the regenerative electric power is consumed, and
the control unit is configured such that, in a state in which a temperature of the catalyst is lower than an upper limit temperature at which deterioration of the catalyst is suppressible, the closer the temperature of the catalyst approaches the upper limit temperature, or the faster a rate of increase in the temperature of the catalyst becomes, the greater a discharge amount of the battery is increased.

EP 4 588 741 A1

FIG. 1

FIG. 2

FIG. 3

# FIG. 4

FIG. 5

REFERENCE
STATE OF CHARGE

TEMPERATURE
OF CATALYST

ELECTRIC POWER
DISCHARGING
REQUEST UNIT
702

SECOND CENTRAL
STATE OF CHARGE

REQUEST
ADJUSTMENT UNIT
703

CENTRAL STATE
OF CHARGE

7

ROAD SURFACE
GRADIENT

ELEVATION

VEHICLE SPEED

MAP INFORMATION

ELECTRIC POWER
CHARGING
REQUEST UNIT
701

FIRST CENTRAL
STATE OF CHARGE

EP 4 588 741 A1

FIG. 6

START

ACQUIRE TEMPERATURE OF CATALYST
AND ACQUIRE MAP INFORMATION
S1

CALCULATE SECOND CENTRAL STATE
OF CHARGE FOR CATALYST
DETERIORATION SUPPRESSION
CONTROL
S2

CALCULATE WORKLOAD
S3

CALCULATE FIRST CENTRAL
STATE OF CHARGE FOR
PRE-CHARGING REQUEST CONTROL
S4

CALCULATE CENTRAL STATE OF CHARGE BASED ON FIRST CENTRAL
STATE OF CHARGE AND SECOND CENTRAL STATE OF CHARGE
S5

END

FIG. 7

# EP 4 588 741 A1

## INTERNATIONAL SEARCH REPORT

| International application No. |
|---|
| **PCT/JP2022/034290** |

**A. CLASSIFICATION OF SUBJECT MATTER**

*B60W 20/13*(2016.01)i; *B60L 58/12*(2019.01)i
FI: B60W20/13; B60L58/12

According to International Patent Classification (IPC) or to both national classification and IPC

**B. FIELDS SEARCHED**

Minimum documentation searched (classification system followed by classification symbols)

B60W20/13; B60L58/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)


**C. DOCUMENTS CONSIDERED TO BE RELEVANT**

| Category* | Citation of document, with indication, where appropriate, of the relevant passages | Relevant to claim No. |
|---|---|---|
| Y | JP 2012-111332 A (TOYOTA JIDOSHA KABUSHIKI KAISHA) 14 June 2012 (2012-06-14) paragraphs [0018]-[0096], fig. 1, 4 | 1-2, 6-7 |
| A | paragraphs [0018]-[0096], fig. 1, 4 | 3-5 |
| Y | JP 2021-24400 A (DAIHATSU MOTOR CO., LTD.) 22 February 2021 (2021-02-22) paragraph [0044] | 1-2, 6-7 |
| Y | JP 2015-83409 A (TOYOTA JIDOSHA KABUSHIKI KAISHA) 30 April 2015 (2015-04-30) paragraph [0019] | 6 |

☐ Further documents are listed in the continuation of Box C.          ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 November 2022** | **29 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2022/034290** |

| Patent document cited in search report | | | Publication date (day/month/year) | Patent family member(s) | Publication date (day/month/year) |
| --- | --- | --- | --- | --- | --- |
| JP | 2012-111332 | A | 14 June 2012 | US 2012/0130577 A1 paragraphs [0032]-[0111], fig. 1, 4<br>CN 102529952 A | |
| JP | 2021-24400 | A | 22 February 2021 | (Family: none) | |
| JP | 2015-83409 | A | 30 April 2015 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021110268 A